# EUROPÄISCHE PATENTSCHRIFT

(11) **EP 0 379 863 B1**
(45) Veröffentlichungstag und Bekanntmachung des Hinweises auf die Patenterteilung: **04.08.1993**
(21) Anmeldenummer: 90100153.7
(22) Anmeldetag: 04.01.1990
(51) Int. Cl.: A21B 3/07, A21B 1/50

(54) **Gargerät mit einem Beschickungswagen**
Cooking apparatus with a loading device
Appareil de cuisson avec un dispositif de chargement

(30) Priorität: 23.01.1989 DE 8900622 U
(43) Veröffentlichungstag der Anmeldung: 01.08.1990
(73) Patentinhaber: JUNO GROSSKÜCHEN GmbH, D-35723 Herborn (DE)
(72) Erfinder: Weyel, Rüdiger, D-6348 Herborn/Guntersdorf (DE); Durth, Wilfried, D-5909 Burbach/Wahlbach (DE)
(74) Vertreter: Grosse, Wolfgang, Dipl.-Ing.

(56) Entgegenhaltungen:
- DE-A- 1 800 800
- DE-A- 2 756 143
- FR-A- 2 505 469
- FR-A- 2 566 998

## Beschreibung

Die Erfindung betrifft ein Gargerät mit einem Beschickungswagen, dessen Speisenträgergestell in den Garraum des Gargerätes einfahrbar ist.

Ein Gargerät mit einem Beschickungswagen ist durch das DE-U 7230 414 bekannt. Der Beschickungswagen besitzt ein Speisenträgergestell für die zu garenden Speisen. Während das Fahrgestell unter das Bodenteil der Wärmebehandlungskammer einfährt, wird das Speisenträgergestell in den Garraum eingefahren. Vorrichtungen zum seitlichen Ausrichten des Beschickungswagens sorgen dafür, daß das Fahrgestell gegenüber dem Garraum einwandfrei seitlich zentriert wird. Solange der Fußboden eben ist, genügt diese seitliche Zentrierung. Leider findet man aber in der Praxis Verhältnisse vor, bei denen die Boden-Höhen-Unterschiede so groß sind, daß ein Ausrichten von Gargerät und zugehörigem Beschickungswagen notwendig ist.
Die vorliegende Erfindung befaßt sich mit der Aufgabe, auch bei unebenen Böden ein einwandfreies Zusammenspiel von Gargerät und Beschickungswagen zu gewährleisten.
Zur Lösung dieser Aufgabe werden die im Patentanspruch 1 angegebenen Merkmale vorgeschlagen.
Durch die Anwendung des Prinzips der schiefen Ebene wird der Beschickungswagen immer entsprechend seiner räumlichen Lage aufgenommen, sodaß durch die exakte Gegenseite die störungsfreie Funktion gewährleistet ist. Türundichtigkeiten sind in jedem Falle vermieden, soweit sie durch unebenen Boden der Küche bedingt sind.
In der Zeichnung ist die Erfindung an einem Ausführungsbeispiel dargestellt.

Es zeigen
Fig. 1 ein Gargerät in Vorderansicht
Fig. 2 in Seitenansicht
Fig. 3 den Beschickungswagen

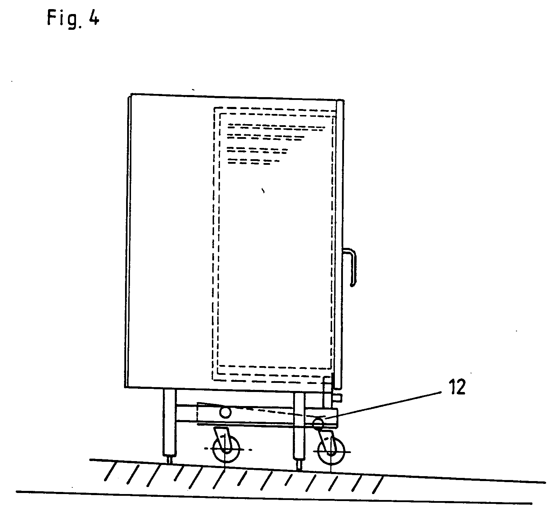

Fig. 4 einem in das Gargerät eingefahrenen Beschickungswagen

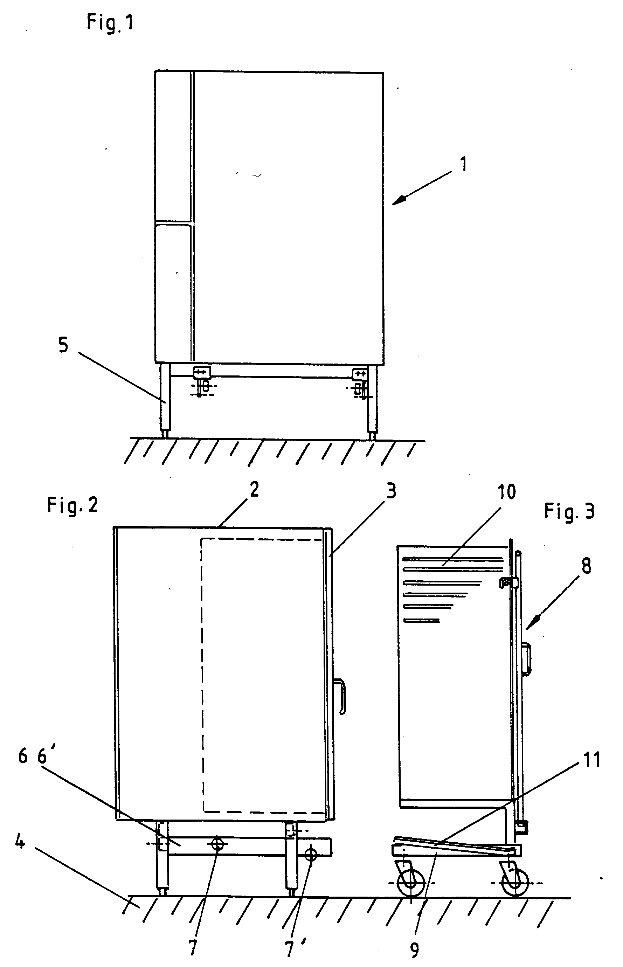

Das Gargerät 1 mit seinem quaderförmigen Gehäuse 2 und der Beschickungstür 3 ist auf dem Küchenboden 4 aufgestellt und mittels der höhenverstellbaren Füße 5 in eine einwandfreie Lage ausrichtbar. Unterhalb des Gerätegehäuses sind an den Füßen zwei Rollenbahnen 6 und 6' angebracht, von denen jede mindestens zwei in der Höhe unterschiedlich positionierte Rollen 7 und 7' aufweist. Der Beschickungswagen 8 kann mit seinem Fahrgestell 9 zwischen den Füßen 5 des Gargerätes so hineinfahren, daß bei geöffneter Beschickungstür das Speisenträgergestell 10 genau in den Garraum paßt. Der Garraum ist in Fig. 2 angedeutet durch gestrichelte Linierung. Dabei gleitet die schiefe Ebene 11 auf die Rollen 7 und 7', wodurch der Beschickungswagen vom Boden abhebt und in exakte Lage zum Gargerät kommt.
Unebenheiten des Bodens sind dadurch ohne Einfluß auf die gegenseitige Lage von Gargerät und eingefahrenem Beschickungswagen. Der Garraum kann ohne Schwierigkeit gut verschlossen werden, und das Gargerät funktioniert einwandfrei. Durch die Neuerung ist die Austauschbarkeit verschiedener Beschickungswagen gewährleistet. Auch können mehrere Wagen für unterschiedliche Gargeräte eingesetzt werden, weil die Bodenverhältnisse ohne Einfluß auf die gegenseitige Lage von Gargerät und Beschickungswagen sind. Die schiefe Ebene 11 ist mit einer Einrastschikane 12 versehen, damit der einfahrende Beschickungswagen in Endstellung gehalten wird. Eine solche Einrastschikane kann eine kleine Mulde sein, in welche eine der Rollen einfährt.

## Patentansprüche

1. Gargerät (1) mit einem Beschickungswagen (8), wobei das Gargerät (1) einen von Füßen (5) getragenen Garraum und der Beschickungswagen (8) ein Fahrgestell (9) und ein Speiseträgergestell (10) aufweist, und wobei der Beschikkungswagen (8) mit dem Fahrgestell (9) zwischen die Füße (5) des Gargerätes (1) einfahrbar ist, so daß das Speiseträgergestell (10) in den Garraum einfährt, **dadurch gekennzeichnet**, daß die Füße (5) des Gargeräts (1) zum Ausgleich von Bodenunebenheiten höhenverstellbar sind, und daß am Beschickungswagen (8) mindestens eine schiefe Ebene (11) vorgesehen ist, die auf mindestens eine am Gargerät (1) angeordnete, entsprechend geneigte Rollenbahn (6, 6') unter Abheben des Fahrgestells (9) aufsetzbar ist.

2. Gargerät nach Anspruch 1, **dadurch gekennzeichnet,** daß im Bereich der Füße an beiden Seiten des Gargeräts (1) in unterschiedlichen Höhen mindestens je zwei Rollen (7, 7') angeordnet sind, welche die Rollenbahnen (6, 6') bilden.

3. Gargerät nach Anspruch 1 oder 2, **dadurch gekennzeichnet,** daß die schiefe Ebene (11) mit einer Einrastschikane (12) versehen ist.

## Claims

1. Cooking apparatus (1) with a loading device (8), wherein the cooking apparatus (1) comprises a cooking chamber supported by feet (5) and the loading device (8) comprises a chassis (9) and a food carrier frame (10), and wherein the loading device (8) can be introduced with the chassis (9) between the feet (5) of the cooking apparatus (1), such that the food carrier frame (10) is introduced into the cooking chamber, characterised in that the feet (5) of the cooking apparatus (1) can be adjusted vertically in order to compensate unevenness in the base; and in that there is provided on the loading device (8) at least one sloping plane (11) which can be placed on at least one roller train (6, 6') which is disposed on the cooking apparatus (1) and is inclined accordingly, whilst the chassis (9) is lifted off.

2. Cooking apparatus according to Claim 1, characterised in that at least two rollers (7, 7') in each case are disposed at different levels in the vicinity of the feet on either side of the cooking apparatus (1) and form the roller trains (6, 6').

3. Cooking apparatus according to Claim 1 or 2, characterised in that the inclined plane (11) is provided with an engaging baffle plate (12).

## Revendications

1. Appareil de cuisson **(1)**, avec un chariot de chargement **(8)**, l'appareil de cuisson **(1)** présentant une enceinte de cuisson portée par des pieds **(5)** et le chariot de chargement **(8)** présentant un bâti de roulage **(9)** et un bâti support de plats **(10)**, et où le chariot de chargement **(8)** est susceptible d'être introduit, avec le bâti de roulage **(9)**, entre les pieds **(5)** de l'appareil de cuisson **(1)**, de sorte que le bâti support de plats **(10)** pénètre dans l'enceinte de cuisson, caractérisé en ce que les pieds **(5)** de l'appareil de cuisson **(1)** sont réglables en hauteur, pour compenser les défauts de planéité du :sol et en ce que sur le chariot de chargement **(8)** est prévu au moins un plan incliné **(11)**, susceptible d'être posé sur au moins un chemin de roulement **(6,6')** d'inclinaison correspondante, disposée sur l'appareil de cuisson **(1)**, ceci étant accompagné d'un soulèvement du bâti de roulage **(9)**.

2. Appareil de cuisson selon la revendication 1, caractérisé en ce que, dans la zone des pieds, des deux côtés de l'appareil de cuisson **(1)**, sont chaque fois disposés à des niveaux différents au moins deux rouleaux **(7,7')** formant le chemin de roulement **(6,6')**.

3. Appareil de cuisson selon la revendication 1 ou 2, caractérisé en ce que le plan incliné **(11)** est pourvu d'une chicane d'encliquetage **(12)**.
